# EUROPÄISCHE PATENTANMELDUNG

(11) **EP 4 119 015 A1**
(43) Veröffentlichungstag der Anmeldung: **18.01.2023**
(21) Anmeldenummer: 21185467.4
(22) Anmeldetag: 14.07.2021
(51) Int. Cl.: A47J 43/07, B26D 1/00, A47J 43/00, B26D 1/29

(54) **SCHNEIDSCHEIBE UND SCHNEIDVORRICHTUNG FÜR EINE ZERKLEINERUNG VON LEBENSMITTELN**

(71) Anmelder: Vorwerk & Co. Interholding GmbH, 42270 Wuppertal (DE)
(72) Erfinder: Dewey, Roland, 42699 Solingen (DE); Ehring, Ingo, 46238 Bottrop (DE); Heynen, Andreas, 42477 Radevormwald (DE); Landsecker, Kai, 40213 Düsseldorf (DE); Sickert, Michael, 58256 Ennepetal (DE)
(74) Vertreter: Gille Hrabal Partnerschaftsgesellschaft mbB Patentanwälte

(57) **Zusammenfassung**

Die Erfindung betrifft eine Schneidscheibe (1), die durch Drehen um eine Achse Lebensmittel zerkleinern kann. Es gibt Schneidelemente (3, 4), die sich auf einer ersten Seite der Schneidscheibe (1) befinden und die durch Drehen der Schneidscheibe (1) in einer ersten Drehrichtung Lebensmittel zerkleinern können und die in erster Drehrichtung gesehen hintereinander angeordnet sind. Hintereinander angeordneten Schneidelemente (3, 4) sind verschieden.

Es kann dadurch eine große Laufruhe erreicht werden.

## Beschreibung

Die Erfindung betrifft eine Schneidscheibe und eine Schneidvorrichtung für eine Zerkleinerung von Lebensmitteln.

Ein Küchengerät mit einer Schneidvorrichtung ist aus der Druckschrift EP 3 427 621 A1 bekannt. Die Schneidvorrichtung umfasst eine drehbare Schneidscheibe, mit der ein Lebensmittel zerkleinert werden kann.

Es ist Aufgabe der Erfindung, eine weiterentwickelte Schneidscheibe und eine entsprechende Schneidvorrichtung zu schaffen. Die Beschaffenheit einer weiterentwickelten Schneidscheibe wird nachfolgend beschrieben.

Eine Schneidscheibe im Sinne der vorliegenden Erfindung ist dafür bestimmt und geeignet, Lebensmittel in einer Küche zu zerkleinern. Die Schneidscheibe besteht daher aus einem Material, welches gegenüber üblichen Lebensmitteln, die durch Schneidscheiben zerkleinert werden, resistent ist. Die Schneidscheibe kann beispielsweise ganz oder zumindest teilweise aus Edelstahl oder Aluminium bestehen. Die Schneidscheibe kann teilweise aus Kunststoff bestehen. Die Schneidscheibe ist grundsätzlich ein kreisrunder Körper, dessen Radius um ein Vielfaches größer ist als seine Dicke. Die Schneidscheibe weist in der Regel einen Durchmesser auf, der größer als 10cm und/oder kleiner als 30 cm ist. In der Regel ist die Bauhöhe der Schneidscheibe geringer als 30 mm.

Die Schneidscheibe ist so eingerichtet, dass diese um eine Achse gedreht werden kann, um so Lebensmittel zu zerkleinern. An der Schneidscheibe kann daher eine Welle befestigt sein oder die Schneidscheibe ist so eingerichtet, dass eine Welle an der Schneidscheibe befestigt werden kann. Die Schneidscheibe kann zu diesem Zweck eine zentrale Öffnung aufweisen und/oder ein oder mehrere Öffnungen beim Zentrum der Schneidscheibe, die der Befestigung einer Welle dienen. Die zentrale Öffnung kann nicht rotationssymmetrisch sein, um eine Drehbewegung einer Welle, die durch die zentrale Öffnung hindurchgeführt ist, auf die Schneidscheibe übertragen zu können. Ein oder mehrere Öffnungen, die um ein Zentrum der Schneidscheibe herum gruppiert sind, können alternativ oder ergänzend dazu dienen, dass ein Drehmoment von einer Welle auf die Schneidscheibe übertragen werden kann. Um die Schneidvorrichtung platzsparend ohne großen Aufwand lagern und transportieren zu können, kann die Schneidscheibe vorteilhaft von der Welle gelöst werden, ohne dafür Werkzeug einsetzen zu müssen. Die Welle kann aus Kunststoff bestehen, um den Fertigungsaufwand und das Gewicht gering halten zu können. Die Welle kann aber auch aus Metall gefertigt sein.

Damit die Schneidscheibe Lebensmittel zerkleinern kann, gibt es auf einer ersten Seite der Schneidscheibe Schneidelemente. Die Schneidelemente sind so beschaffen, dass diese ein Lebensmittel zerkleinern, wenn die Schneidscheibe in einer ersten Drehrichtung gedreht wird und das Lebensmittel an der ersten Seite anliegt. Das Zerkleinern geschieht dann durch Schneidkanten der Schneidelemente. Die Schneidscheibe weist Öffnungen auf, durch die hindurch zerkleinertes Lebensmittel die Schneidscheibe passieren kann.

Grundsätzlich können die Schneidelemente das an der ersten Seite anliegende Lebensmittel nicht zerkleinern, wenn die Schneidscheibe in die entgegengesetzte zweite Drehrichtung gedreht wird.

Die Schneidelemente sind in erster Drehrichtung gesehen grundsätzlich hintereinander angeordnet. Liegt ein Lebensmittel an der ersten Seite an und wird die Schneidscheibe in der ersten Drehrichtung gedreht, dann wird das Lebensmittel zuerst durch ein dann vorne liegendes Schneidelement zerkleinert und danach durch ein zweites Schneidelement, welches in erster Drehrichtung gesehen dann hinter dem ersten Schneidelement liegt. Das vorne liegende Schneidelement bzw. die in diesem Sinne vorne liegenden Schneidelemente unterscheiden sich vorzugsweise von den ein oder mehreren dahinter liegenden Schneidelementen. Die Schneidelemente weisen insbesondere anders geformte Schneidkanten auf. Eine Schneidkante kann beispielsweise gewölbt verlaufen und die anders geformte Schneidkante ausschließlich geradlinig oder zumindest fast ausschließlich geradlinig. Es können auch beide Schneidkanten gewölbt sein, wobei die Schneidkanten sich durch unterschiedliche Breiten unterscheiden.

Mit gewölbt ist ein bogenförmiger Verlauf gemeint oder ein Verlauf, der einem bogenförmigen Verlauf angenähert ist. Eine weit überwiegend geradlinig verlaufende Schneidkante, die lediglich am Randbereich aus Fertigungs- und/oder Befestigungsgründen einen gewölbten Verlauf aufweist, ist keine gewölbt verlaufende Schneidkante im Sinne der vorliegenden Erfindung. Durch ein Schneidelement mit einem gewölbten Verlauf seiner Schneidkante kann ein Lebensmittel streifenförmig, nicht aber scheibenförmig, zerkleinert werden. Durch ein Schneidelement mit geradlinig verlaufender Schneidkante kann ein Lebensmittel in der Regel scheibenförmig zerkleinert werden.

Eine praktisch ausschließlich geradlinig verlaufende Schneidkante verläuft grundsätzlich parallel zur angrenzenden Hauptoberfläche der Schneidscheibe.

Durch das Vorsehen von Schneidelementen, die hintereinander angeordnet sind und die sich unterscheiden, kann die Laufruhe der Schneidscheibe während des Zerkleinerns verbessert werden.

In einer Ausgestaltung sind auf der ersten Seite erste Schneidelemente mit ersten gleichen Schneidkanten und ein zweites Schneidelement mit einer zweiten Schneidkante vorhanden, wobei sich die ersten Schneidkanten von der zweiten Schneidkante unterscheiden.

Die ersten Schneidkanten sind vorzugsweise bogenförmig und die zweite Schneidkante ist vorzugsweise geradlinig. Obwohl eine Schneidkante mit geradlinigem Verlauf ein Lebensmittel grundsätzlich in Scheiben zerteilt, hat diese Ausgestaltung zur Folge, dass ein Lebensmittel zumindest praktisch vollständig streifenförmig zerkleinert werden kann. Haben die ersten Schneidkanten Streifen aus einem Lebensmittel herausgeschnitten, so ist die an die erste Fläche der Schneidscheibe dann anliegende Oberfläche des Lebensmittels streifenförmig. Wird nun diese streifenförmige Oberfläche mithilfe einer geradlinig verlaufenden Schneidkante abgeschnitten, so sind erneut Streifen von dem Lebensmittel abgetrennt worden. Es kann also bei dieser Ausgestaltung gelingen, ein Lebensmittel praktisch vollständig streifenförmig zu zerkleinern, obwohl auch eine geradlinig verlaufende Schneidkante an der Zerkleinerung beteiligt ist. Durch diese Ausgestaltung kann eine besonders große Laufruhe erzielt werden.

Vorzugsweise entspricht die Kontur zwischen zwei Schneidelementen mit gewölbten Schneidkanten einer um 180° gedrehten Schneidkante. Die maximale Breite der Kontur ist dann gleich der maximalen Breite der gewölbten Kontur oder zumindest ist im Wesentlichen gleich. Es können dann besonders gleichmäßig geformte Streifen erhalten werden.

Vorzugsweise gibt es einen geringen Abstand zwischen den hintereinanderliegenden unterschiedlichen Schneidelementen. Damit ist gemeint, dass es entlang der Umlaufbahn zwei unterschiedliche Abstände zwischen Schneidkanten von hintereinanderliegenden unterschiedlichen Schneidelementen gibt und folglich in einer Drehrichtung entlang eines Kreisbogens. Es ist dann in erster Drehrichtung gesehen ein erster Abstand ausgehend von einem ersten Schneidelement zum dahinter liegenden zweiten Schneidelement klein und in Drehrichtung gesehen ein zweiter Abstand ausgehend von dem zweiten Schneidelement zum dahinter liegenden ersten Schneidelement groß. Der zweite Abstand ist insbesondere um ein Vielfaches größer als der erste Abstand, vorzugsweise wenigstens dreimal so groß, besonders bevorzugt wenigstens fünfmal so groß. Es wird dadurch erreicht, dass die hintereinanderliegenden Schneidelemente praktisch immer in einer gewünschten Reihenfolge zerkleinern, also beispielsweise praktisch immer erst durch eine Mehrzahl von Schneidelementen mit gewölbten Schneidkanten und im Anschluss daran durch ein einzelnes Schneidelement mit einer geradlinig verlaufenden Schneidkante. Dies gilt für den Fall, dass die Schneidscheibe in der ersten Drehrichtung gedreht wird. Anstelle eines einzelnen Schneidelement mit einer geradlinig verlaufenden Schneidkante können zwar beispielsweise auch zwei Schneidelemente mit einer geradlinig verlaufenden Schneidkante nebeneinander vorhanden sein. Damit ist jedoch ein höherer Herstellungsaufwand verbunden, sodass das Vorsehen von nur einem Schneidelement mit einer geradlinig verlaufenden Schneidkante zu bevorzugen ist. Dieses ist dann vorzugsweise wenigstens halb so lang wie der Radius der Schneidscheibe, vorzugsweise wenigstens ¾ so lang, um große Bereiche abdecken zu können. Eine Aufteilung in zwei Schneidelemente mit geradlinig verlaufender Schneidkante kann aber von Vorteil sein, wenn dadurch eine gewünschte Förderrichtung eines anliegenden Lebensmittels beispielsweise zum Außenrand der Scheibe unterstützt wird.

Der Abstand zwischen Schneidkanten von hintereinander liegenden Schneidelementen, die nicht gleich sind, kann im Fall eines geringen Abstands nicht mehr als 80 mm, vorzugsweise nicht mehr als 60 mm, betragen. In Schneidrichtung gesehen sind erste Schneidkanten von Schneidelementen dann vorzugsweise gewölbt und eine dahinterliegende Schneidkante eines Schneidelements geradlinig. Es können dann verbessert praktisch ausschließlich Streifen aus einem Lebensmittel mit großer Laufruhe herausgeschnitten werden.

Die maximale Höhe der Schneidkanten gegenüber der angrenzenden Hauptoberfläche der Schneidscheibe beträgt vorzugsweise wenigstens 2 mm. Verläuft eine geradlinig verlaufende Schneidkante parallel zur Hauptoberfläche, so befindet sich die gesamte geradlinige Schneidkante wenigstens 2 mm oberhalb der Hauptoberfläche. Verläuft eine Schneidkante bogenförmig, dann befindet sich zumindest ein höchster Punkt der bogenförmigen Schneidkante wenigstens 2 mm oberhalb der Hauptoberfläche, von der das zugehörige Schneidelement absteht. Es hat sich herausgestellt, dass vor allem relativ weit von einer Hauptoberfläche abstehende Schneidelemente für eine Laufunruhe sorgen können. Es besteht also bei solchen Schneidelementen ein besonderer Bedarf, für eine verbesserte Laufruhe sorgen zu müssen. Aus diesem Grund steht die maximale Höhe der Schneidkanten der Schneidelemente gegenüber der angrenzenden Hauptoberfläche vorzugsweise wenigstens 2 mm ab, besonders bevorzugt wenigstens 3 mm, da dies der besonders relevante Anwendungsfall ist.

Die maximale Höhe der Schneidkanten, die bei Drehung der Schneidscheibe in der ersten Drehrichtung ein Lebensmittel zerkleinern können, ist vorzugsweise gleich. Es können dann vorteilhaft immer gleich dicke Stücke von einem Lebensmittel abgeschnitten werden. Ein gleichmäßiges Schneidergebnis kann so erhalten werden.

Auf der ersten Seite der Schneidscheibe können ein oder mehrere weitere Schneidelemente vorhanden sein. Die ein oder mehreren weiteren Schneidelemente können durch Drehen der Schneidscheibe in einer zweiten Drehrichtung Lebensmittel zerkleinern. Die erste Drehrichtung ist entgegengesetzt zur zweiten Drehrichtung. Die ein oder mehreren weiteren Schneidelemente unterscheiden sich von den Schneidelementen, die ein Lebensmittel zerkleinern können, wenn in der ersten Drehrichtung gedreht wird. Durch Auswahl der Drehrichtung können damit unterschiedliche Schneidergebnisse erzielt werden. Mit nur einer Schneidscheibe kann damit die Anzahl der Zerkleinerungsmöglichkeiten vorteilhaft vergrößert werden.

Die ein oder mehreren weiteren Schneidelemente, die durch Drehen der Schneidscheibe in der zweiten Drehrichtung Lebensmittel zerkleinern können, können beispielsweise gewölbte Schneidkanten aufweisen.

Vorzugsweise ist die maximale Höhe dieser gewölbten Schneidkanten geringer als die Höhe von gewölbten Schneidkanten, die ein Lebensmittel zerkleinern können, wenn in der ersten Drehrichtung gedreht wird. Hierdurch wird vorteilhaft erreicht, dass auch bei Drehen in der zweiten Drehrichtung keine übermäßig große Laufunruhe auftritt. Die Schneidkanten, die durch Drehen der Schneidscheibe in der zweiten Drehrichtung Lebensmittel zerkleinern können, stehen daher vorzugsweise weniger als 2 mm von der angrenzenden Hauptoberfläche der Schneidscheibe ab, um übermäßig große Laufunruhen zu vermeiden. Streifen, die von den so bemessenen Schneidkanten abgeschnitten werden, sind dann dünner als 2 mm. Die Breite dieser Streifen hängt dann von der Breite der Schneidkanten ab.

Auf der zweiten Seite der Schneidscheibe, die der ersten Seite gegenüberliegt, können ein oder mehrere Schneidelemente vorhanden sein, die bei Drehen der Schneidscheibe in der ersten Drehrichtung Lebensmittel zerkleinern können. Es können ein oder mehrere zweite Schneidelemente vorhanden sein, die bei Drehen der Schneidscheibe in der dazu entgegengesetzten zweiten Drehrichtung Lebensmittel zerkleinern können. Auch die zweite Seite der Schneidscheibe kann damit vorteilhaft für ein Zerkleinern von Lebensmitteln genutzt werden. Dies ist insbesondere dann von Vorteil, wenn sich die Schneidelemente auf der zweiten Seite von den Schneidelementen auf der ersten Seite unterscheiden. Es kann dann noch variabler ausgewählt werden, wie ein Lebensmittel zerkleinert werden soll. Vorzugsweise unterscheiden sich aus diesem Grund auch die Schneidelemente auf der zweiten Seite, die in der ersten Drehrichtung ein Lebensmittel zerkleinern können, von den Schneidmitteln auf der zweiten Seite, die durch Drehen in der dazu entgegengesetzten zweiten Drehrichtung ein Lebensmittel zerkleinern können.

Die Schneidkanten der Schneidelemente auf der zweiten Seite sind beispielsweise geradlinig. Die Schneidelemente auf der zweiten Seite können dann ein Lebensmittel scheibenförmig zerkleinern. Insgesamt steht dann eine Schneidscheibe zur Verfügung, die sowohl streifenförmig als auch scheibenförmig zerkleinern kann. Ein Lebensmittel, welches an der ersten Seite der Schneidscheibe anliegt, kann dann vorzugsweise nur streifenförmig zerkleinert werden. In Abhängigkeit von der Drehrichtung können dünnere oder dickere Streifen erhalten werden. Ein Lebensmittel, welches an der zweiten Seite der Schneidscheibe anliegt, kann dann vorzugsweise nur scheibenförmig zerkleinert werden. In Abhängigkeit von der Drehrichtung können dickere oder dünnere Scheiben erhalten werden. Durch Auswahl der Seite kann also entschieden werden, ob streifenförmig oder scheibenförmig ein Lebensmittel zerkleinert werden soll. Durch Auswahl der Drehrichtung kann die Dicke ausgewählt werden. Es ist aus Gründen der Übersichtlichkeit vorteilhaft, dass eine jeweilige Seite der Schneidscheibe so mit Schneidelementen ausgestattet ist, dass entweder praktisch nur streifenförmig oder praktisch nur scheibenförmig ein Lebensmittel zerkleinert werden kann.

Bei einer Schneidscheibe gehört zu jedem Schneidelement eine Durchgangsöffnung, durch die hindurch ein zerkleinertes Lebensmittel die Scheibe passieren kann. Vorzugsweise gibt es Schneidelemente mit geradlinig verlaufenden Schneidkanten, die eine gemeinsame Durchgangsöffnung haben und die sich an gegenüberliegenden Seiten der Schneidscheibe befinden. Die Zahl der Durchgangsöffnungen und damit der Herstellungsaufwand können so geringgehalten werden.

Schneidelemente, die bogenförmig verlaufende Schneidkanten haben, sind vorzugsweise einstückig mit der übrigen Schneidscheibe verbunden. Diese Schneidelemente sind nicht getrennt von der übrigen Schneidscheibe hergestellt und im Anschluss an die Herstellung mit der übrigen Schneidscheibe verbunden worden. Diese Schneidelemente können durch Stanzen und Umformen eines Blechs gefertigt worden sein.

Schneidelemente, die geradlinig verlaufende Schneidkanten aufweisen, können separat gefertigt und im Anschluss daran mit dem übrigen Teil der Schneidscheibe verbunden worden sein. Dies kann beispielsweise durch Nieten geschehen sein. Alternativ können Schneidelemente, die geradlinig verlaufende Schneidkanten aufweisen, ebenfalls durch Stanzen und Umformen aus einem Blech herausgearbeitet worden sein. Es kann dann aber an Randbereichen eine Abweichung vom geradlinigen Verlauf geben. Dennoch verlaufen die Schneidkanten immer noch weit überwiegend geradlinig.

In einer Ausgestaltung gibt es eine Welle, die von den beiden Hauptoberflächen der Schneidscheibe gleich weit absteht. Diese Ausgestaltung erleichtert, dass beide Seiten der Schneidscheibe für ein Zerkleinern genutzt werden können, da die Länge der Welle von der Einsetzrichtung der Schneidscheibe unabhängig ist.

Die Welle kann an ihren Enden gleiche Kupplungselemente umfassen. Die Welle kann dann beispielsweise mit der Welle eines Motors gekuppelt werden, um die Schneidscheibe über einen Motor anzutreiben. Das Vorsehen von gleichen Kupplungselementen erleichtert es, dass beide Seiten der Schneidscheibe für ein Zerkleinern genutzt werden können, da keine Anpassung von Kupplungselementen erforderlich ist.

Ein Kupplungselement kann beispielsweise einen sternförmigen Innenumfang umfassen. Ein solches Kupplungselement kann mit einem Kupplungselement drehfest gekuppelt werden, das einen entsprechend dimensionierten sternförmigen Außenumfang aufweist. Ein Kupplungselement kann beispielsweise einen sternförmigen Außenumfang umfassen. Ein solches Kupplungselement kann mit einem Kupplungselement drehfest gekuppelt werden, das einen entsprechend dimensionierten sternförmigen Innenumfang aufweist. Für ein Kuppeln genügt es, dass das eine Kupplungselement in das andere hineingesteckt wird. Anstelle einer Sternform können andere nicht rotationssymmetrische Formen für den Außen bzw. Innenumfang vorgesehen sein. So kann der jeweilige Innenumfang der Kupplungselemente der Welle quadratisch sein, der jeweils mit einem anderen Kupplungselement durch Hineinstecken drehfest gekuppelt werden kann, wobei das andere Kupplungselement dann einen quadratischen Innenumfang aufweisen sollte.

Vorzugsweise sind Schneidelemente der Schneidscheibe so angeordnet und/oder ausgerichtet, dass diese ein Lebensmittel zentrifugal in Richtung benachbarter Außenseite der Schneidscheibe fördern können, wenn die Schneidscheibe gedreht wird. Dieser Ausgestaltung kann eine gleichmäßige Zufuhr eines Lebensmittels zur Schneidscheibe fördern und trägt dadurch zu guten Schneidergebnissen bei.

Vorzugsweise gibt es eine Schneidvorrichtung, die mithilfe der Schneidscheibe Lebensmittel zerkleinern kann. Die Schneidvorrichtung umfasst einen Motor, durch den die Schneidscheibe sowohl im Uhrzeigersinn als auch gegen den Uhrzeigersinn gedreht werden kann. Die Welle des Motors kann vorzugsweise über Kupplungselemente mit der an der Schneidscheibe angebrachten Welle lösbar verbunden werden. Die Kupplungselemente sind so, dass die beiden Wellen drehfest in Drehrichtung miteinander verbunden werden können. Eine feste Verbindung in axialer Richtung ist nicht zwingend erforderlich.

Die Schneidvorrichtung kann einen Zuführstutzen umfassen, über den ein Lebensmittel zur Schneidscheibe geführt werden kann. Wird ein Lebensmittel über den Zuführstutzen der Schneidscheibe zugeführt und dreht sich die Schneidscheibe, so wird dadurch das zugeführte Lebensmittel zerkleinert.

Der Zuführstutzen kann zwei Schächte umfassen. Über einen jeden Schacht kann dann ein Lebensmittel zur Schneidscheibe geführt werden. Die beiden Schächte können durch eine gemeinsame Wand voneinander getrennt sein.

Nachfolgend wird die Erfindung anhand von Figuren näher erläutert. Nachfolgend genannte Merkmale können einzeln oder in einer Mehrzahl mit den beanspruchten Gegenständen kombiniert werden, sofern nichts Gegenteiliges angegeben wird. Die beanspruchten Schutzbereiche sind nicht auf die Ausführungsbeispiele beschränkt.

Es zeigen:
- Figur 1:: Schneidscheibe mit geneigter Sicht auf erste Seite;
- Figur 2:: Aufsicht auf Schneidscheibe;
- Figur 3:: Aufsicht auf zweiter Ausführungsform einer Schneidscheibe;
- Figur 4:: Schnittdarstellung durch einen Ausschnitt der in der Figur 3 gezeigten Schneidscheibe;
- Figur 5:: Aufsicht auf ein erstes Teil einer Welle;
- Figur 6:: Aufsicht auf ein zweites Teil einer Welle;
- Figur 7:: erstes Beispiel eines gewölbten Verlaufs einer Schneidkante;
- Figur 8:: zweites Beispiel eines gewölbten Verlaufs einer Schneidkante;
- Figur 9:: drittes Beispiel eines gewölbten Verlaufs einer Schneidkante;
- Figur 10:: Beispiel eines geradlinigen Verlaufs einer Schneidkante.

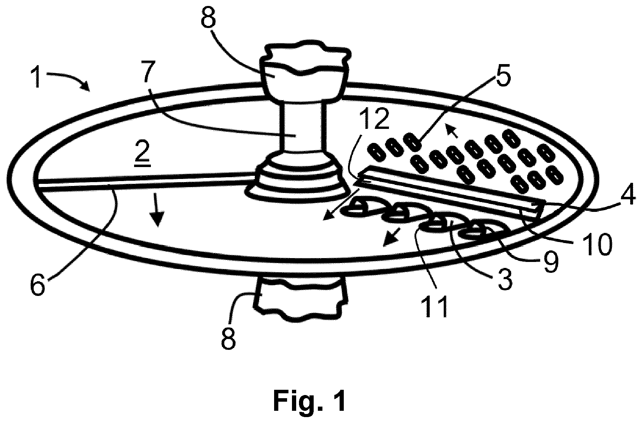

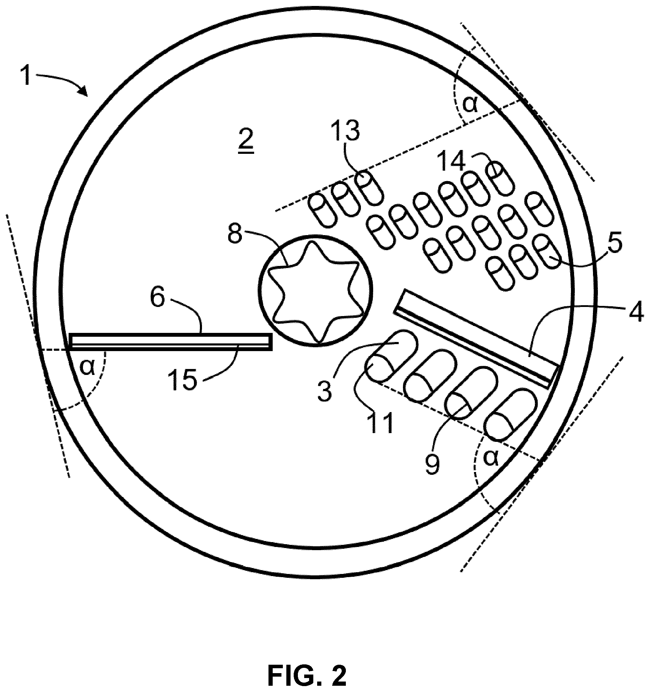

Die Figuren 1 und 2 zeigen eine Schneidscheibe 1 für eine Schneidvorrichtung. Von einer Hauptoberfläche 2 der Schneidscheibe 1 stehen Schneidelemente 3, 4, 5 nach oben ab. Die Schneidelemente 3, 4, 5 befinden sich daher auf einer ersten Seite der Schneidscheibe 1. Die Figur 1 zeigt eine geneigte Sicht auf die Schneidscheibe 1. Die Figur 2 zeigt eine Aufsicht auf die Schneidscheibe 1.

Es gibt einen Schlitz 6, der als Durchgangsöffnung für zerkleinertes Lebensmittel dient. Das zugehörige Schneidelement ist eine Klinge mit geradlinig verlaufender Schneidkante, die sich auf der gegenüberliegenden zweiten Seite der Schneidscheibe 1 befindet.

Durch das Zentrum der Schneidscheibe 1 führt eine Welle 7 hindurch. An beiden Enden der Welle 7 gibt es gleiche Kupplungselemente 8. Die Kupplungselemente 8 stehen gleich weit von den jeweiligen Hauptoberflächen der Schneidscheibe 1 ab. Beide Kupplungselemente 8 können daher in gleicher Weise mit einem dazu korrespondierenden Kupplungselement verbunden werden, wobei das korrespondierende Kupplungselement ein Kupplungselement einer Motorwelle sein kann.

Die Schneidelemente 3 weisen bogenförmig verlaufende Schneidkanten 9 auf und sind ansonsten wie eine Haube geformt. Unterhalb der Schneidkanten 9 gibt es jeweils eine Durchgangsöffnung 11 für Lebensmittel, das durch die Schneidkanten 9 zerkleinert worden ist. Das hinter den Schneidelementen 3 angeordnete Schneidelement 4 weist eine geradlinig verlaufende Schneidkante 10 auf. Unterhalb der geradlinig verlaufende Schneidkante 10 gibt es eine Durchgangsöffnung 12 für Lebensmittel, das durch die geradlinig verlaufende Schneidkante 10 zerkleinert worden ist. Die Durchgangsöffnung 12 ist ein Schlitz, der rechteckig sein kann. Beide Schneidelemente 3 und 4 zerkleinern ein an der Hauptoberfläche 2 anliegendes Lebensmittel, wenn die Schneidscheibe 1 im Uhrzeigersinn in einer ersten Drehrichtung gedreht wird. Beide Schneidelemente 3 und 4 zerkleinern ein an der Hauptoberfläche 2 anliegendes Lebensmittel nicht, wenn die Schneidscheibe 1 entgegengesetzt zum Uhrzeigersinn in einer zweiten Drehrichtung gedreht wird.

Von der Hauptoberfläche 2 aus gesehen sind die Schneidelemente 3 mit den bogenförmigen Schneidkanten 9 drei Millimeter hoch. Damit steht die bogenförmige Schneidkante 9 bis zu drei Millimeter von der Hauptoberfläche 2 ab. Die Schneidelemente 3 zerkleinern ein Lebensmittel streifenförmig. Die maximale Dicke eines streifenförmig zerkleinerten Lebensmittels entspricht der maximalen Höhe der Schneidkanten 9 und beträgt daher knapp 3 mm. Das Maximum der Höhe der bogenförmigen Schneidkanten 9 entspricht also der Dicke der aus einem Lebensmittel herausgeschnittenen Streifen.

Der Abstand zwischen der geradlinig verlaufende Schneidkante 10 des unmittelbar dahinter angeordneten Schneidelements 4 zur Hauptoberfläche 2 beträgt ebenfalls drei Millimeter. Wären die Schneidelemente 3 mit den bogenförmigen Schneidkanten 9 nicht vorhanden, so würde das Schneidelement 4 ein an der Hauptoberfläche 2 anliegendes Lebensmittel scheibenförmig zerkleinern, wenn die Schneidscheibe 1 in der ersten Drehrichtung gedreht würde. Da aber dann praktisch immer zuerst ca. drei Millimeter dicke Streifen durch die Schneidelemente 3 mit den bogenförmigen Schneidkanten 9 aus einem Lebensmittel herausgeschnitten werden, trennt das Schneidelement 4 mit der geradlinig verlaufenden Schneidkante 10 ebenfalls ca. drei Millimeter dicke Streifen von einem Lebensmittel ab.

Von dem Schneidelement 4 mit der geradlinig verlaufenden Schneidkante 10 in erster Drehrichtung gesehen ist der Abstand zu den Schneidelementen 3 mit den bogenförmigen Schneidkanten 9 gering und beträgt beispielsweise nicht mehr als 40 mm. Von den Schneidelementen 3 mit den bogenförmigen Schneidkanten 9 in erster Drehrichtung entlang der Umlaufbahn gesehen ist der Abstand zu dem Schneidelement 4 mit der geradlinig verlaufenden Schneidkante 10 groß und beträgt ein Vielfaches von 40 mm. Mit Abstand ist die Entfernung entlang eines Kreisbogens parallel zum Außenumfang der Schneidscheibe 1 gemeint.

Anstelle des Abstands kann der Drehwinkel betrachtet werden, um den die Schneidscheibe 1 gedreht werden muss, damit ein Lebensmittel durch beide Schneidelemente 3 und 4 zerkleinert wird. Wird ein Lebensmittel durch die Schneidelemente 3 mit den bogenförmigen Schneidkanten 9 zerkleinert, so ist der Drehwinkel klein, um das Lebensmittel im Anschluss daran durch das Schneidelement 4 mit der geradlinig verlaufenden Schneidkante 10 zu zerkleinern. Wird ein Lebensmittel durch das Schneidelement 4 mit der geradlinig verlaufenden Schneidkante 10 zerkleinert, so ist der Drehwinkel im Vergleich dazu groß und zwar um ein Vielfaches größer, um das Lebensmittel im Anschluss daran durch die Schneidelemente 3 mit den bogenförmigen Schneidkanten 9 zu zerkleinern. Diese Anordnung bewirkt, dass praktisch ausschließlich Streifen aus einem Lebensmittel herausgeschnitten werden und nicht in einem ersten Umlauf eine Scheibe, wenn in erster Drehrichtung gedreht wird.

Von der Hauptoberfläche 2 stehen eine Vielzahl von haubenförmigen Schneidelementen 5 nach oben ab, die ebenfalls bogenförmig verlaufende Schneidkanten aufweisen. Die Schneidelemente 5 sind flächig verteilt. Die Schneidelemente 5 zerkleinern ein Lebensmittel streifenförmig, wenn die Schneidscheibe 1 in der zweiten Drehrichtung und damit entgegengesetzt zum Uhrzeigersinn gedreht wird. Die Schneidelemente 5 sind kleiner als die Schneidelemente 3. Die Schneidelemente 5 sind von der Hauptoberfläche 2 aus gesehen 1 mm hoch. Die Schneidkanten der Schneidelemente 5 stehen daher maximal 1 mm von der Hauptoberfläche 2 nach oben ab. Es können also ca. 1 mm dicke Streifen aus einem Lebensmittel herausgeschnitten werden.

Auf der Unterseite beim Schlitz 12 gibt es eine parallel zum Schlitz 12 verlaufende Klinge eines Schneidelements, welches sich auf der anderen Seite der Schneidscheibe 1 befindet. Zwei Schneidelemente mit jeweils geradlinig verlaufender Schneidkante haben daher eine gemeinsame Durchgangsöffnung 12.

Die Schneidelemente 3 sind nebeneinander leicht versetzt entlang einer gedachten Linie so angeordnet, dass ein zu zerkleinerndes Lebensmittel während des Zerkleinerns verstärkt in Richtung äußeren Rand der Schneidscheibe 1 gefördert wird, wie dies in der Figur 1 durch einen Pfeil angedeutet wird. Die gedachte Linie schließt mit dem Außenrand daher einen Winkel α kleiner als 90° ein (siehe Figur 2).

Der Schlitz 12 und damit auch die dazu parallel verlaufende Schneidkante 10 schließen mit dem Außenrand der Schneidscheibe 1 einen Winkel α kleiner als 90° ein. Dadurch wird ebenfalls erreicht, dass ein zu zerkleinerndes Lebensmittel während des Zerkleinerns verstärkt in Richtung äußeren Rand der Schneidscheibe 1 gefördert wird. Die nach oben abstehende Klinge des Schneidelements 4 wirkt also durch ihre Anordnung zentrifugal auf ein Lebensmittel ein, wenn die nach oben abstehende Klinge ein Lebensmittel zerkleinert.

Haubenförmige Schneidelemente 5 sind leicht versetzt nebeneinander entlang einer gedachten Linie so angeordnet, dass diese gedachte Linie mit dem Außenrand der Schneidscheibe 1 einen Winkel α kleiner als 90° einschließt. Es gibt mehrere Reihen von leicht versetzt nebeneinander angeordneten haubenförmigen Schneidelementen 5. Dadurch wird ein zu zerkleinerndes Lebensmittel während des Zerkleinerns verstärkt wie durch einen Pfeil in der Figur 1 angedeutet in Richtung Außenrand gefördert, wenn die Schneidscheibe 1 in zweiter Drehrichtung gedreht wird. Die nach oben abstehenden Schneidelemente 19 wirken also durch ihre Anordnung zentrifugal auf ein Lebensmittel ein, wenn die nach oben abstehenden Schneidelemente 19 ein Lebensmittel zerkleinern. Lebensmittel werden zum äußeren Rand der Schneidscheibe gefördert und hier gehalten. Die Lage der Lebensmittel kann so stabilisiert werden, was zu besonders gleichmäßigen Zerkleinerungsergebnissen führt.

Um das Fördern eines Lebensmittels zum Außenrand der Schneidscheibe 1 weiter verbessert zu fördern, können in zweiter Drehrichtung gesehen zunächst nur wenige vorne in einer Reihe liegende Schneidelemente 5 beim Zentrum der Schneidscheibe 1 vorhanden sein, die also einen relativ großen Abstand zum Außenrand der Schneidscheibe 1 aufweisen. In den Figuren 1 und 2 werden beispielhaft nur drei solcher vorne liegenden Schneidelemente 5 gezeigt. Dahinter gibt es eine Reihe von Schneidelementen 5, die deutlich näher bis zum Außenrand der Schneidscheibe 1 heranreicht. Insgesamt werden sechs solcher Schneidelemente 5 in einer zweiten Reihe in den Figuren 1 und 2 gezeigt. Die Schneidelemente 5 in der ersten Reihe sind also vorteilhaft wenige im Vergleich zu den Schneidelementen 5 in der zweiten Reihe. Dahinter kann es eine dritte Reihe von Schneidelementen 5 geben, die noch weiter bis zum Außenrand der Schneidscheibe 1 heranreicht. Beispielhaft werden fünf solcher Schneidelemente 5 in dritter Reihe in den Figuren 1 und 2 gezeigt. Die Zahl der Schneidelemente 5 in der dritten Reihe kann geringer sein als die Zahl der Schneidelemente 5 in der zweiten Reihe, da zuvor schon beim Zentrum der Schneidscheibe 1 Schneidelemente 5 vorhanden waren, die ein Lebensmittel streifenförmig zerkleinern konnten. Außerdem ist dann ein Lebensmittel in der Regel bereits zum Außenrand der Schneidscheibe 1 gefördert worden.

Es kann eine vierte Reihe mit Schneidelementen 5 geben, die sehr nahe bis zum Außenrand der Schneidscheibe 1 heranreicht. Da bereits zuvor ein Lebensmittel nahe beim Zentrum der Schneidscheibe zerkleinert worden ist, genügen in der letzten Reihe noch weniger Schneidelemente 5. In den Figuren 1 und 2 werden drei solcher Schneidelemente 5 in der letzten Reihe gezeigt. Außerdem ist dann ein Lebensmittel in der Regel bereits zum Außenrand der Schneidscheibe 1 gefördert worden, so dass in der vierten Reihe Schneidelemente 5 beim Zentrum auch deshalb entbehrlich sind.

Allgemein gilt, dass eine vorne liegende erste Reihe an das Zentrum angrenzen sollte, nicht aber an den Außenrand. Eine vorne liegende erste Reihe wird nur aus wenigen Schneidelementen gebildet und zwar insbesondere im Vergleich zu einer sich dahinter befindlichen Reihe an Schneidelementen. Allgemein gilt, dass eine hinten liegende letzte Reihe nicht an das Zentrum angrenzen sollte, aber an den Außenrand. Eine hinten liegende letzte Reihe wird nur aus wenigen Schneidelementen gebildet und zwar insbesondere im Vergleich zu einer sich davor befindlichen Reihe an Schneidelementen. Mittlere Reihen entfernen sich tendenziell vom Zentrum der Schneidscheibe und rücken in Richtung Außenrand. Es kann aber auch eine mittlere Reihe geben, die vom Zentrum zum Außenrand reicht.

Die Schneidelemente 3, 4 und 5 liegen nahe beieinander, um eine gute Laufruhe zu erzielen. Die Fläche einer halben Schneidscheibe 1 genügt daher für die Anordnung sämtlicher Schneidelemente mit Ausnahme des an der gegenüberliegenden Seite vorhandenen Schneidelements der Durchgangsöffnung 6.

In der Figur 2 sind die Durchgangsöffnungen 13 und die bogenförmigen Schneidkanten 14 der Schneidelemente 5 sowie die geradlinige Schneidkante 15, die der Durchgangsöffnung 6 zugeordnet ist, zu erkennen.

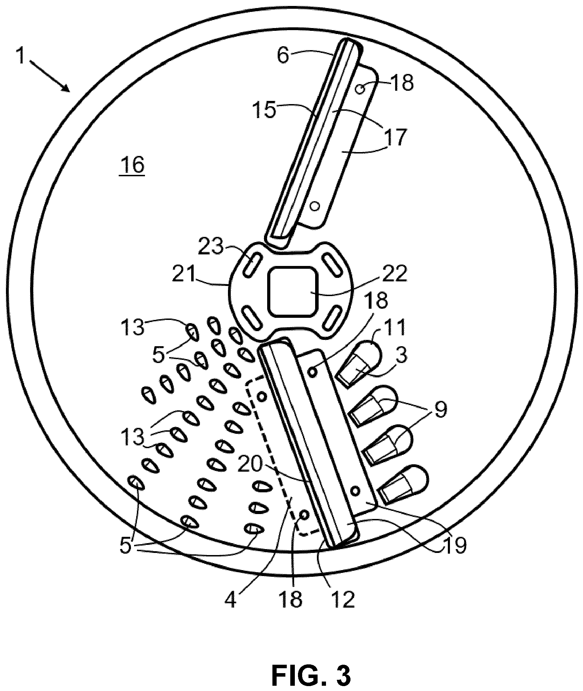

Die Figur 3 zeigt eine zweite Ausführungsform der Erfindung und zwar eine Aufsicht auf die zweite Hauptoberfläche 16, von der zwei Schneidelemente 17 und 19 abstehen. Mit in den Figuren 1 und 2 übereinstimmende Bezugszeichen weisen auf Gemeinsamkeiten hin.

Die beiden Schneidelemente 17 und 19 können mit Nieten oder Schrauben 18 an der Hauptoberfläche 16 befestigt sein. Die beiden Schneidelemente 17 und 19 sind Klingen mit geradlinigen Schneidkanten 15 bzw. 20. Die beiden Schneidelemente 17 und 19 weisen in Umlaufrichtung gesehen einen vergleichsweise großen Abstand auf, um ein gleichmäßiges Drehverhalten zu erzielen. Der Drehwinkel zwischen den beiden Schneidelementen 17 und 19 beträgt unabhängig von der Drehrichtung immer wenigstens 90°. Das Schneidelement 17 befindet sich damit in einer Hälfte der Schneidscheibe 1 und sämtliche anderen Schneidelemente 3, 4, 5, 19 in einer anderen Hälfte der Schneidscheibe 1.

Wird die Schneidscheibe 1 in einer zweiten Drehrichtung im Gegenuhrzeigersinn gedreht, so zerkleinert das Schneidelement 17 mit der geradlinigen Schneidkante 15 ein an der Hauptoberfläche 16 anliegendes Lebensmittel scheibenförmig. Die Schneidkante 15 steht beispielsweise 1 mm von der Hauptoberfläche 16 ab. Die Dicke einer von einem Lebensmittel abgetrennten Scheibe beträgt daher dann ca. 1 mm. Wird die Schneidscheibe 1 in einer ersten Drehrichtung im Uhrzeigersinn gedreht, so zerkleinert das Schneidelement 19 mit der geradlinigen Schneidkante 20 ein an der Hauptoberfläche 16 anliegendes Lebensmittel scheibenförmig. Die Schneidkante 20 steht beispielsweise 4 mm von der Hauptoberfläche 16 ab. Die Dicke der von einem Lebensmittel abgetrennten Scheiben beträgt daher dann ca. 4 mm. In Abhängigkeit von der Drehrichtung der Schneidscheibe 1 können also unterschiedlich dicke Scheiben von einem Lebensmittel abgetrennt werden. Bereits bei der ersten Ausführungsform, die in den Figuren 1 und 2 gezeigt wird, teilen sich das Schneidelement 4 und das Schneidelement 19 eine gemeinsame Durchgangsöffnung 12. In der Figur 3 wird der Teil des Schneidelements 4 gestrichelt gezeigt, der an der gegenüberliegenden Hauptoberfläche durch Nieten oder Schrauben 18 befestigt sein kann.

Von der Rückseite sind die Schneidelemente 3 und 5 zu sehen und zwar durch die Durchgangsöffnungen 11 und 13 hindurch. Vorne liegend gibt es in der ersten Reihe nur zwei nebeneinander liegende Schneidelemente 5. Die erste Reihe grenzt an das Zentrum 21 der Schneidscheibe 1 an. Diese erste Reihe an Schneidelementen 5 weist einen großen Abstand zum äußeren Rand bzw. Außenrand der Schneidscheibe 1 auf. Die zweite Reihe der Schneidelemente 5 reicht erneut bis zum Zentrum 21, weist aber immer noch einen deutlichen Abstand zum äußeren Rand der Schneidscheibe 1 auf. Es werden in diesem Fall sechs Schneidelemente 5 in der zweiten Reihe gezeigt. Die erste Reihe an Schneidelementen 5 schließt mit der zweiten Reihe an Schneidelementen 5 einen spitzen Winkel ein, um ein Lebensmittel weiter verbessert zum Außenrand zu fördern.

Hinter der zweiten Reihe an Schneidelementen 5 befindet sich eine dritte Reihe an Schneidelementen 5, die vom Außenrand der Schneidscheibe 1 bis zum Zentrum 21 reicht. Insgesamt werden beispielhaft neun Schneidelemente 5 in der dritten Reihe gezeigt. Eine dahinterliegende vierte Reihe an Schneidelementen 5 reicht bis zum Außenrand der Schneidscheibe 1 aber nicht mehr bis nahe zum Zentrum 21 der Schneidscheibe 1. Insgesamt werden sieben Schneidelemente 5 in der vierten Reihe beispielhaft gezeigt. Eine fünfte Reihe an Schneidelementen 5 umfasst nur noch drei Schneidelemente 5 nahe beim Außenrand der Schneidscheibe 1. Sämtliche Reihen schließen untereinander einen spitzen Winkel derart ein, dass ein Fördern eines Lebensmittels zum Außenrand der Schneidscheibe 1 unterstützt wird.

Die gewölbt verlaufenden Schneidkanten 9 der Schneidelemente 3 verlaufen nicht parallel zueinander bzw. zu einer gedachten Linie, sondern in etwa parallel zu einem gedachten Bogen, um weiter verbessert zum Außenrand ein Lebensmittel zu fördern. Mit anderen Worten, würde man die Schneidkanten 9 der Schneidelemente 3 nebeneinander legen, ohne dabei ihre Ausrichtung zu verändern, so würde so eine Art Bogenform gebildet werden.

Die Schneidscheibe 1 in der Figur 3 wird ohne eine Welle gezeigt. Es ist zu sehen, dass es eine zentrale näherungsweise quadratische Öffnung 22 gibt, die von vier Langlöchern 23, also von vier länglichen Öffnungen, umgeben wird. Diese Öffnungen ermöglichen es, eine aus zwei Teilen gebildete Welle lösbar mit der Schneidscheibe 1 zu verbinden.

Das Schneidelement, das zur Durchgangsöffnung 6 gehört, weist einen relativ großen Abstand zu dem Schneidelement

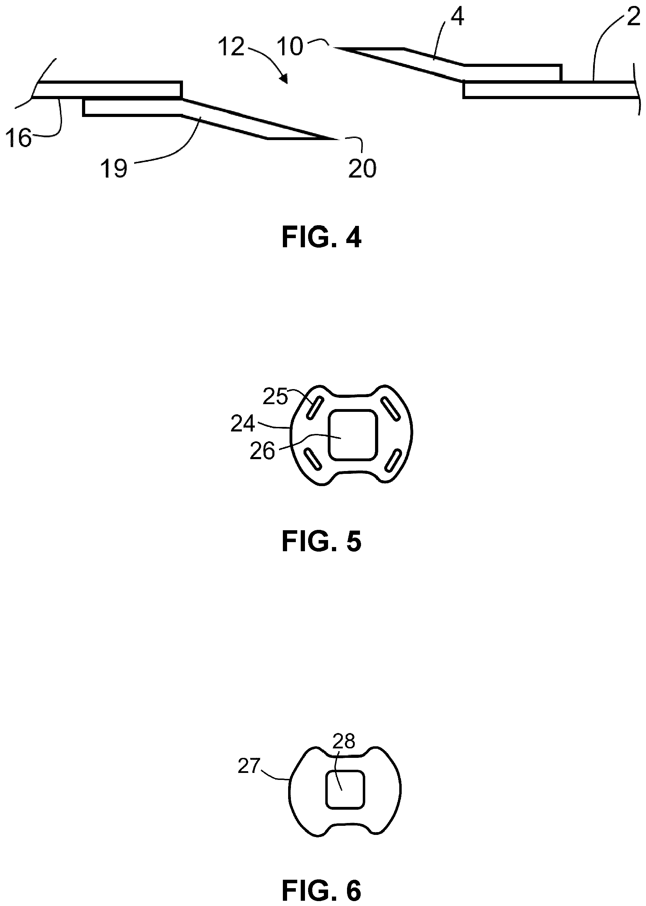

Die Figur 4 zeigt einen Schnitt durch einen Ausschnitt der Schneidscheibe aus Figur 3 im Bereich der Durchgangsöffnung 12. Die Figur 4 verdeutlicht, dass die Schneidelemente 4 und 19 die Durchgangsöffnung 12 gemeinsam nutzen.

Die Figur 5 zeigt eine Aufsicht auf die Unterseite 24 des einen Teils der zweiteiligen Welle. Die Figur 6 zeigt die Unterseite 27 des anderen Teils der zweiteiligen Welle. Beide Unterseiten werden gegenüberliegend auf die Schneidscheibe aufgesetzt.

Die eine Unterseite 24 weist vorstehende, im Schnitt längliche Stege 25 auf, die in die Öffnungen 23 der in der Figur 3 gezeigten Schneidscheibe 1 hineingesteckt werden, wenn die Unterseite 24 auf die Schneidscheibe aufgesetzt wird. Dadurch kann ein Drehmoment von der Welle auf die Schneidscheibe 1 übertragen werden. Es gibt außerdem eine näherungsweise quadratische zentrale Öffnung 26, die der zentralen näherungsweise quadratischen Öffnung 22 der in der Figur 3 gezeigten Schneidscheibe 1 gleicht.

Die Unterseite 27 des zweiten Teils der Welle weist einen im Schnitt in etwa quadratischen Steg 28 auf, der durch die zentrale Öffnung 22 der Schneidscheibe 1 hindurch in die zentrale Öffnung 26 des ersten Teils der Welle zum Beispiel klemmend hineingesteckt werden kann. Alternativ oder ergänzend zu einer Klemmverbindung können beispielsweise an der seitlichen Wandung des im Schnitt in etwa quadratischen Stegs 28 ein oder mehrere Rastvorsprünge vorhanden sein, die mit dazu korrespondierenden Ausnehmungen innerhalb der Öffnung 26 des ersten Teils der Welle verrasten können. Die beiden Teile der Welle können also beispielsweise kraftschlüssig und/oder formschlüssig miteinander verbunden werden. Die beiden Teile der Welle können aber auch miteinander verklebt und/oder an den Hauptoberflächen 2, 16 festgeklebt und damit dauerhaft miteinander verbunden sein.

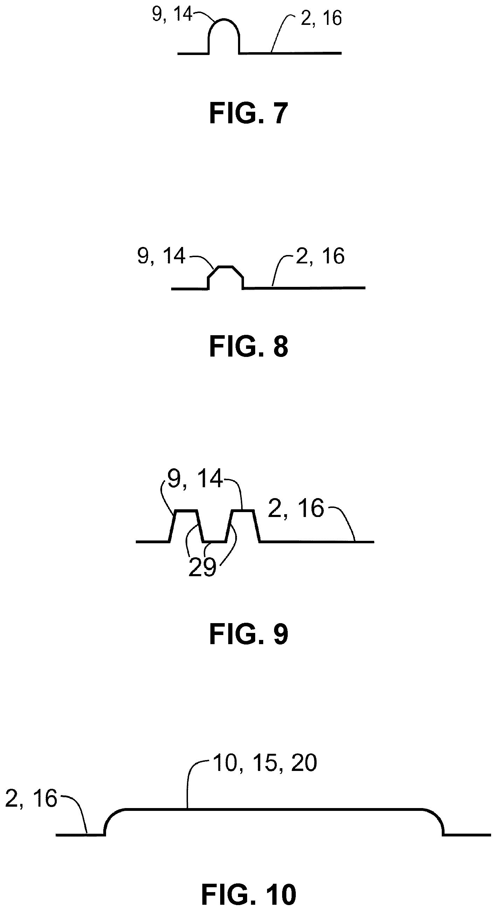

Die Figuren Figur 7 bis 9 zeigen Beispiele eines gewölbten Verlaufs einer Schneidkante 9, 14, die ein Lebensmittel in der Regel streifenförmig zerkleinern. Die maximale Höhe der in den Figuren 7 bis 9 gezeigten Schneidkanten 9, 14 ähnelt der maximalen Breite der Schneidkanten 9, 14. In keinem der gezeigten Fälle beträgt die maximale Höhe ein Vielfaches der maximalen Breite oder umgekehrt.

In der Figur 7 wird ein bogenförmiger Verlauf der Schneidkante 9, 14 gezeigt. Die maximale Höhe übersteigt etwas die maximale Breite.

In der Figur 8 wird ein eckiger Verlauf der Schneidkante 9, 14 gezeigt, der einem bogenförmigen Verlauf angenähert ist. Die Schneidkante 9, 14 umfasst fünf Schenkel. Zwei benachbarte Schenkel, die in eine Ecke einmünden, schließen einen Winkel ein, der 45° beträgt. Die maximale Breite der Schneidkante 9, 14 übersteigt etwas die maximale Höhe.

In der Figur 9 wird ein eckiger Verlauf von zwei Schneidkanten 9, 14 gezeigt, der jeweils einem bogenförmigen Verlauf angenähert ist. Eine jede Schneidkante 9, 14 umfasst drei Schenkel. Zwei benachbarte Schenkel, die in eine Ecke einmünden, schließen einen Winkel ein, der zwischen 80° und 90° liegt. Die maximale Breite einer jeden Schneidkante 9, 14 entspricht der maximalen Höhe. Die Kontur 29 zwischen den beiden Schneidelementen mit den Schneidkanten 9, 14 kann wie in der Figur 9 gezeigt einer um 180° gedrehten Schneidkante 9 entsprechen, um gleichmäßig geformte Streifen im Fall der hinter einander liegenden Schneidelemente 3, 4 zu erhalten.

In der Figur 10 wird ein Beispiel für eine geradlinig verlaufende Schneidkante 10, 15, 20 gezeigt. Zwar gibt es im Randbereich der Schneidkante jeweils eine Bogenform. Im Unterschied zu den gewölbten Verläufen ist der der Verlauf weit überwiegend geradlinig, was zur Folge hat, dass ein Lebensmittel in der Regel scheibenförmig zerkleinert wird. Die maximale Breite der Schneidkante 10, 15 übersteigt um ein Vielfaches die maximale Höhe.

In den Figuren 7 bis 10 werden Aufsichten auf die Schneidkanten gezeigt.

## Patentansprüche

1. Schneidscheibe (1), die durch Drehen um eine Achse Lebensmittel zerkleinern kann, mit Schneidelementen (3, 4), die sich auf einer ersten Seite der Schneidscheibe (1) befinden und die durch Drehen der Schneidscheibe (1) in einer ersten Drehrichtung Lebensmittel zerkleinern können und die in erster Drehrichtung gesehen hintereinander angeordnet sind, **dadurch gekennzeichnet, dass** hintereinander angeordnete Schneidelemente (3, 4) verschieden sind.

2. Schneidscheibe (1) nach dem vorhergehenden Anspruch, **dadurch gekennzeichnet, dass** mehrere der Schneidelemente (3) eine gewölbte Schneidkante (9) aufweisen.

3. Schneidscheibe (1) nach dem vorhergehenden Anspruch, **dadurch gekennzeichnet, dass** die Kontur (29) zwischen zwei Schneidelementen (3) mit gewölbten Schneidkanten (9) einer um 180° gedrehten Schneidkante (9) entspricht.

4. Schneidscheibe (1) nach einem der zwei vorhergehenden Ansprüche, **dadurch gekennzeichnet, dass** Schneidkanten (9) der Schneidelemente (3) in etwa parallel zu einem gedachten Bogen verlaufen.

5. Schneidscheibe (1) nach einem der vorhergehenden Ansprüche, **dadurch gekennzeichnet, dass** ein Schneidelement (4) der Schneidelemente (3, 4) eine geradlinige Schneidkante (10) aufweist.

6. Schneidscheibe (1) nach einem der vorhergehenden Ansprüche, **dadurch gekennzeichnet, dass** der Abstand zwischen Schneidkanten (9, 10) von hintereinander liegenden Schneidelementen (3, 4) nicht mehr als 80 mm, vorzugsweise nicht mehr als 60 mm, beträgt und Schneidkanten (9) der in erster Drehrichtung gesehen vorne liegenden Schneidelemente (3) gewölbt sind und dahinter zumindest ein Schneidelement (4) mit geradlinig verlaufender Schneidkante (10) vorhanden ist.

7. Schneidscheibe (1) nach einem der vorhergehenden Ansprüche, **dadurch gekennzeichnet, dass** die maximale Höhe der Schneidkanten (9, 10) gegenüber der angrenzenden Hauptoberfläche (2) der Schneidscheibe (1) wenigstens 2 mm beträgt.

8. Schneidscheibe (1) nach einem der vorhergehenden Ansprüche, **dadurch gekennzeichnet, dass** die maximale Höhe der Schneidkanten (9, 10) gleich ist.

9. Schneidscheibe (1) nach einem der vorhergehenden Ansprüche, **dadurch gekennzeichnet, dass** auf der ersten Seite weitere ein oder mehrere Schneidelemente (5) vorhanden sind, die durch Drehen der Schneidscheibe (1) in einer zweiten Drehrichtung Lebensmittel zerkleinern können, wobei die erste Drehrichtung entgegengesetzt zur zweiten Drehrichtung ist.

10. Schneidscheibe (1) nach dem vorhergehenden Anspruch, **dadurch gekennzeichnet, dass** die Schneidelemente (5), die durch Drehen der Schneidscheibe (1) in der zweiten Drehrichtung Lebensmittel zerkleinern können, gewölbte Schneidkanten (14) aufweisen.

11. Schneidscheibe (1) nach dem vorhergehenden Anspruch, **dadurch gekennzeichnet, dass** die Schneidkanten (14), die durch Drehen der Schneidscheibe (1) in der zweiten Drehrichtung Lebensmittel zerkleinern können, weniger als 2 mm von der angrenzenden Hauptoberfläche der Schneidscheibe (1) abstehen.

12. Schneidscheibe (1) nach einem der vorhergehenden Ansprüche, **dadurch gekennzeichnet, dass** auf der zweiten Seite der Schneidscheibe (1), die der ersten Seite gegenüberliegt, ein oder mehrere erste Schneidelemente (19) vorhanden sind, die bei Drehen der Schneidscheibe (1) in der ersten Drehrichtung Lebensmittel zerkleinern können und ein oder mehrere zweite Schneidelemente (17), die bei Drehen der Schneidscheibe (1) in der dazu entgegengesetzten zweiten Drehrichtung Lebensmittel zerkleinern können, wobei die ein oder mehreren ersten Schneidelemente (19) anders sind als die ein oder mehreren zweiten Schneidelemente (17).

13. Schneidscheibe (1) nach dem vorhergehenden Anspruch, **dadurch gekennzeichnet, dass** die Schneidkanten 15, 20) der Schneidelemente (17, 19) auf der zweiten Seite geradlinig sind.

14. Schneidscheibe (1) nach einem der vorhergehenden Ansprüche, **dadurch gekennzeichnet, dass** Schneidelemente (4, 19) mit einer gemeinsamen Durchgangsöffnung (12) vorhanden sind, die sich an gegenüberliegenden Seiten der Schneidscheibe (1) befinden.

15. Schneidscheibe (1) nach einem der vorhergehenden Ansprüche, **dadurch gekennzeichnet, dass** eine Welle (7) für die Schneidscheibe (1) vorhanden ist, die von beiden Hauptoberflächen (2, 16) der Schneidscheibe (1) gleich weit absteht und die an ihren Enden gleiche Kupplungselemente (8) umfasst.
